# EUROPEAN PATENT SPECIFICATION

(11) **EP 4 218 276 B1**
(45) Date of publication and mention of the grant of the patent: **09.04.2025**
(21) Application number: 20966344.2
(22) Date of filing: 23.12.2020
(51) Int. Cl.: H04W 12/043, H04W 12/041, H04W 36/00, H04W 76/19, H04W 12/03

(54) **A METHOD FOR KEY TRANSFER**
VERFAHREN ZUR SCHLÜSSELÜBERTRAGUNG
PROCÉDÉ POUR LE TRANSFERT DE CLÉ

(43) Date of publication of application: 02.08.2023
(73) Proprietor: ZTE Corporation, Shenzhen, Guangdong 518057 (CN)
(72) Inventor: MA, Zijiang, Shenzhen, Guangdong 518057 (CN); LI, Wenting, Shenzhen, Guangdong 518057 (CN); HUANG, He, Shenzhen, Guangdong 518057 (CN); LU, Chen, Shenzhen, Guangdong 518057 (CN); MA, Wei, Shenzhen, Guangdong 518057 (CN)
(74) Representative: Vossius & Partner Patentanwälte Rechtsanwälte mbB
(86) International application number: PCT/CN2020/138479
(87) International publication number: WO 2022/133764

(56) References cited:
- WO-A1-2015/027524
- WO-A1-2018/214903
- WO-A1-2018/214903
- US-A1- 2016 127 896
- US-A1- 2017 223 755
- US-A1- 2019 059 128
- US-A1- 2019 124 506

## Description

This document is directed generally to wireless communications.

When a user equipment (UE) resumes connections with a serving node (e.g. radio access network (RAN) node), the serving node needs to request UE context from the last serving node of the UE, wherein the UE context may comprise a security key configured to the UE in previous connections with the last serving node. If the security key is not used by the last serving node, the security key can be transferred to the serving node and the serving node can use the security key to cipher UL/DL data for the UE. However, if the security key is used by the last serving node when the last serving node receives the request for the UE context, the last serving node cannot send the security key because different nodes cannot use the same security key.

WO 2018/214903 A1 is a related prior art document.

This document relates to methods, systems, and devices for key transfer, and in particular to methods, systems, and devices for key transfer during a resume procedure. The invention is specified by the independent claims. Preferred embodiments are defined in the dependent claims. In the following description, although numerous features may be designated as optional, it is nevertheless acknowledged that all features comprised in the independent claims are not to be read as optional.

The present disclosure relates to a wireless communication method for use in an anchor node. The method comprises:
receiving, from a serving node, a context request message associated with a wireless terminal, wherein a first key and a first next hop chaining count are transmitted to the wireless terminal in a previous connection between the anchor node and the wireless terminal and wherein a second key determined based on the first key and the first next hop chaining count is used by the anchor node, and
transmitting, to the serving node, a context response message comprising a third key which is different from the second key and a second next hop chaining count.

Various embodiments may preferably implement the following features:
Preferably, the third key is an intermediate key used between the of the wireless terminal and the serving node.

Preferably, the third key is determined based on the second key.

Preferably, the first key and the first next hop chaining count are transmitted via a radio resource control connection release message.

Preferably, the context response message further comprises the second key.

Preferably, the wireless communication method further comprises:
receiving, from the serving node, a first message comprising a radio resource control message associated with the mobile terminal, and
transmitting, to the serving node, a second message comprising the radio resource control message encrypted by the second key.

Preferably, the radio resource control message is one of a radio resource control resume message or a radio resource control release message.

Preferably, the first message and the second message are Xn application protocol, XnAP, signaling.

The present disclosure relates to a wireless communication method for use in a serving node, the method comprising:
receiving, from a wireless terminal, a resume request message which is encrypted by a first key, wherein the first key and a first next hop chaining count are transmitted to the wireless terminal in a previous connection between an anchor node and the wireless terminal,
transmitting, to the anchor node, a context request message associated with the wireless terminal,
receiving, from the anchor node, a context response message comprising a third key and a second next hop chaining count, wherein the third key is different from a second key determined based on the first key and the first next hop chaining count, and
transmitting, to the wireless terminal, a radio resource control message which is encrypted by the second key and comprises the third key and the second next hop chaining count.

Various embodiments may preferably implement the following features:
Preferably, the third key is an intermediate key used between the of the wireless terminal and the serving node.

Preferably, the third key is determined based on the second key.

Preferably, the wireless communication method further comprises receiving, from the wireless terminal, at least one signaling message of the wireless terminal and/or uplink data no earlier than receiving the resume request message and/or transmitting the radio resource control message, wherein the at least one signaling message of the wireless terminal and the uplink data are encrypted by the second key.

Preferably, the first key and the first next hop chaining count are transmitted via a radio resource control connection Release message.

Preferably, the radio resource control message is one of a radio resource control resume message or a radio resource control release message.

Preferably, the context response message further comprises the second key.

Preferably, the wireless communication method further comprises:
transmitting, to the anchor node, a first message comprising the radio resource control message, and
receiving, from the anchor node, a second message comprising the radio resource control message encrypted by the second key.

Preferably, the first message and the second message are Xn application protocol, XnAP, signaling.

Preferably, the wireless communication method further comprises communicating with the wireless terminal by using the third key after transmitting the radio resource control message.

The present disclosure relates to a wireless communication method for use in a wireless terminal, the method comprising:
transmitting, to a serving node, a resume request message which is encrypted by a first key , wherein the first key and a first next hop chaining count are received in a previous connection between the wireless terminal and an anchor node different from the serving node, and
receiving, from the serving node, a radio resource control message which is encrypted by a second key determined based on the first key and the first next hop chaining count and comprises a third key which is different from the second key and a second next hop chaining count.

Various embodiments may preferably implement the following features:
Preferably, the third key is an intermediate key used between the of the wireless terminal and the serving node.

Preferably, the third key is determined based on the second key.

Preferably, the wireless communication method further comprises:
transmitting, to the serving node, at least one signaling message of the wireless terminal and/or uplink data no earlier than transmitting the resume request message and/or before receiving the radio resource control message,
wherein the at least one signaling message of the wireless terminal and the uplink data are encrypted by the second key.

Preferably, the first key and the first next hop chaining count are received in a radio resource control connection Release message.

Preferably, the radio resource control message is one of a radio resource control Resume message or a radio resource control Release message.

Preferably, the wireless communication method further comprises communicating with the serving node by using the third key after receiving the radio resource control message.

The present disclosure relates to an anchor node. The anchor node comprises:
a communication unit, configured to:
receive, from a serving node, a context request message associated with a wireless terminal, wherein a first key and a first next hop chaining count are transmitted to the wireless terminal in a previous connection between the anchor node and the wireless terminal and wherein a second key determined based on the first key and the first next hop chaining count is used by the anchor node, and
transmit, to the serving node, a context response message comprising a third key which is different from the second key and a second next hop chaining count.

Various embodiments may preferably implement the following feature:
Preferably, the anchor node further comprises a processor configured to perform any of the aforementioned wireless communication method.

The present disclosure relates to a serving node. The serving node comprises:
a communication unit, configured to:
receive, from a wireless terminal, a resume request message which is encrypted by a first key, wherein the first key and a first next hop chaining count are transmitted to the wireless terminal in a previous connection between an anchor node and the wireless terminal,
transmit, to the anchor node, a context request message associated with the wireless terminal,
receive, from the anchor node, a context response message comprising a third key and a second next hop chaining count, wherein the third key is different from a second key determined based on the first key and the first next hop chaining count, and
transmit, to the wireless terminal, a radio resource control message which is encrypted by the second key and comprises the third key and the second next hop chaining count.

Various embodiments may preferably implement the following feature:
Preferably, the serving node further comprises a processor configured to perform any of the aforementioned wireless communication method.

The present disclosure relates to a wireless terminal. The wireless terminal comprises:
a communication unit, configured to:
transmit, to a serving node, a resume request message which is encrypted by a first key, wherein the first key and a first next hop chaining count are received in a previous connection between the wireless terminal and an anchor node different from the serving node, and
receive, from the serving node, a radio resource control message which is encrypted by a second key determined based on the first key and the first next hop chaining count and comprises a third key which is different from the second key and a second next hop chaining count.

Various embodiments may preferably implement the following feature:
Preferably, the wireless terminal further comprises a processor configured to perform any of the aforementioned wireless communication method.

The present disclosure relates to a computer program product comprising a computer-readable program medium code stored thereupon, the code, when executed by a processor, causing the processor to implement a wireless communication method recited in any one of foregoing methods.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.
FIG. 1 shows a schematic diagram of a radio resource control resume procedure according to an embodiment of the present disclosure.
FIG. 2 shows a schematic diagram of a radio resource control resume procedure according to an embodiment of the present disclosure.
FIG. 3 shows a schematic diagram of a mobile originated early day transmission procedure without anchor relocation according to an embodiment of the present disclosure.
FIG. 4 shows a schematic diagram of a mobile originated early day transmission procedure without anchor relocation according to an embodiment of the present disclosure.
FIG. 5 shows a schematic diagram of a procedure associated with security key transfer according to an embodiment of the present disclosure.
FIG. 6 shows a schematic diagram of a procedure associated with security key transfer according to an embodiment of the present disclosure.
FIG. 7 shows a flowchart of a process according to an embodiment of the present disclosure.
FIG. 8 shows a flowchart of a process according to an embodiment of the present disclosure.
FIG. 9 shows a flowchart of a process according to an embodiment of the present disclosure.
FIG. 10 shows an example of a schematic diagram of a wireless terminal according to an embodiment of the present disclosure.
FIG. 11 shows an example of a schematic diagram of a wireless network node according to an embodiment of the present disclosure.

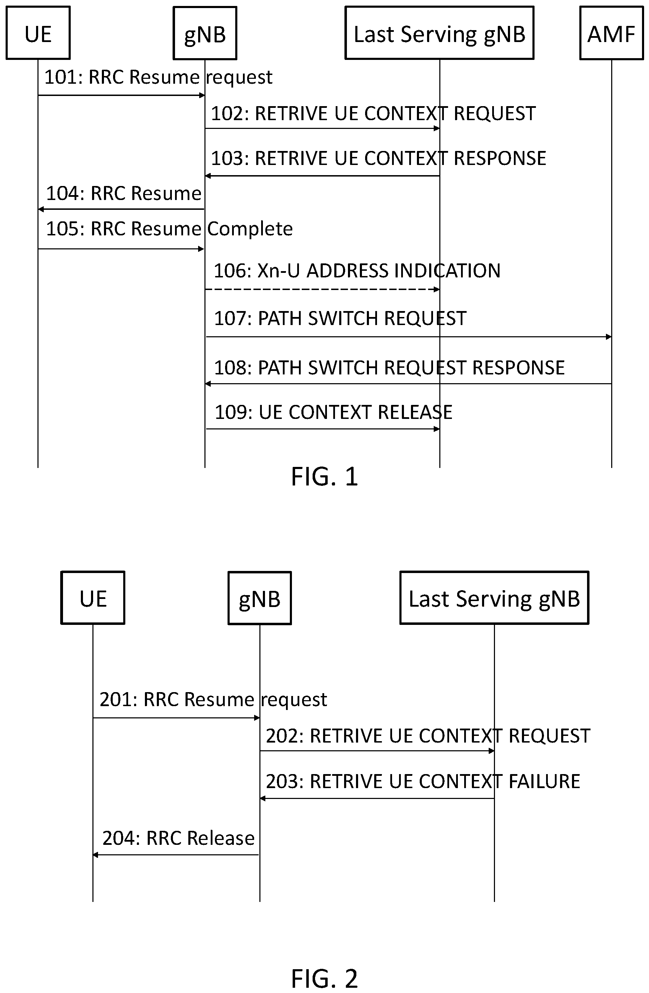

FIG. 1 relates to a radio resource control (RRC) resume procedure with anchor relocation according to an embodiment of the present disclosure. In this embodiment, the UE context is transferred from an anchor gNB (e.g. the last serving gNB) to a current serving gNB (e.g. receiving gNB), a path switch procedure is performed after the UE context is fetched and the serving gNB becomes the new anchor gNB after the anchor relocation (e.g. the relocation of the UE context).

In the present disclosure, the gNB may be equal to a wireless network node, a radio access network (RAN) node, a next generation (NG) RAN node, an evolved Node B (eNB), or an NG-eNB. In addition, the UL/DL data in the following may be data for a small data transmission (SDT). In the present disclosure, the SDT may be a data transmission performed for the UE in an inactive state (e.g. radio resource control (RRC) inactive state (RRC_INACTIVE)) or a connection management (CM) connected (CM-CONNECTED) state. The SDT may be performed in a random access procedure or a(n) (RRC) resume procedure. In an embodiment, fundamental characteristics of the SDT may comprise at least one of:
- a(n) (application) packet size of 100 bytes for uplink (UL) and 100 bytes for downlink (DL);
- latency of 5 seconds to 30 minutes; 1 hour for no mobility scenario;
- frequency of every minute and up to monthly.

Note that, the latency of the SDT is a duration from the packet of the SDT arriving at the buffer until the packet is completely transmitted. According to an embodiment, the small data transmission is further specified in 3GPP TR 25.705 V13.0.0.

In FIG. 1, the UE is in an inactive state (e.g. RRC INACTIVE) and/or in the CM-CONNECTED state. In the beginning of the RRC resume procedure, the UE resumes from the inactive state and sends an RRC resume request (message) to a gNB (e.g. serving gNB or receiving gNB), for providing an inactive identifier (e.g. inactive radio network temporary identifier (I-RNTI)) allocated by the last serving gNB and a cause value. The cause value indicates a cause (e.g. reason, purpose) of sending the RRC resume request. For example, the cause value may indicate an RAN notification area (RNA) update (step 101).

In step 102, the gNB, if able to resolve an identity (e.g. associated with the last serving gNB) contained in the inactive identifier, requests the last serving gNB to provide UE context, e.g. by providing the cause value received in step 101.

In step 103, the last serving gNB provides the UE context in a response message (e.g. RETRIEVE UE CONTEXT RESPONSE).

In step 104, the gNB transmits an RRC Resume message to keep the UE in the inactive state.

In step 105, the UE transmits an RRC Resume complete message to the gNB.

In step 106, if loss of downlink (DL) user data buffered in the last serving gNB shall be prevented, the gNB provides forwarding addresses to the last serving gNB.

In steps 107 and 108, the gNB performs a path switch procedure with an access and mobility management function (AMF).

In step 109, the gNB triggers a release of the UE resources at the last serving gNB.

FIG. 2 relates to an RRC resume procedure without the anchor relocation according to an embodiment of the present disclosure. Note that, the RRC resume procedure without the anchor relocation may only be used for the RNA update.

In detail, the UE resumes from the inactive state (e.g. RRC_INACTIVE) by sending an RRC resume request (message) to the gNB and providing the I-RNTI allocated by the last serving gNB and the appropriate cause value, e.g., indicating the RNA update (step 201).

In step 202, the gNB, if able to determine the gNB identity contained in the I-RNTI, requests the last serving gNB to provide the UE context by providing the cause value received in step 201.

In step 203, the last serving gNB stores the received information to be used in the next resume attempt (e.g. cell RNTI (C-RNTI) and physical cell identifier (PCI) related to a resumption cell), and responds to the gNB with the a failure message (e.g. RETRIEVE UE CONTEXT FAILURE message) including an encapsulated RRC Release message. In an embodiment, the RRC Release message includes a suspend indication.

In step 204, the gNB forwards the RRC Release message to the UE.

In the RRC resume procedure, since the serving gNB may not be able to identify the anchor gNB based on the short I-RNTI, the serving gNB may send the context request message (e.g. Retrieve UE Context Request message) to multiple potential anchor gNBs. Considering the context request message can only be verified by the corresponding anchor gNB and only the anchor gNB has the UE context, it is up to the anchor gNB to determine whether the anchor relocation (i.e. the relocation of the UE context) is needed or not.

In the following, the receiving gNB may be equal to a receiving node and/or the gNB shown in FIGS. 1 and 2. The anchor gNB may be equal to an anchor node and/or the last serving gNB shown in FIGS. 1 and 2.

In Rel-16, a mobile originated early day transmission, MO-EDT, function is introduced. The MO-EDT allows one UL data transmission to be optionally followed by one DL data transmission during the random access procedure.

The MO-EDT for user plane consumer-internet-of-thing (CIoT) optimization (e.g. as defined in TS 24.501) are characterized by:
- the UE is provided with a Next Hop Chaining Count (NCC) in an RRC Connection Release message with a suspend indication;
- UL user data are transmitted on a dedicated traffic channel (DTCH) multiplexed with UL RRC Connection Resume Request message on a common control channel (CCCH);
- DL user data are optionally transmitted on the DTCH multiplexed with DL RRC Connection Release message on a DL control channel (DCCH);
- the short Resume message-authentication-code-for-integrity (MAC-I) is reused as an authentication token for RRC Connection Resume Request message and is calculated using the integrity key from the previous connection;
- The user data in UL and DL are ciphered (e.g. encrypted). The keys are derived by using the NCC provided in the RRC Connection Release message of the previous RRC connection;
- The RRC Connection Release message is integrity protected and ciphered using the newly derived keys;
- There is no transition to a connected state (e.g. RRC CONNECTED).

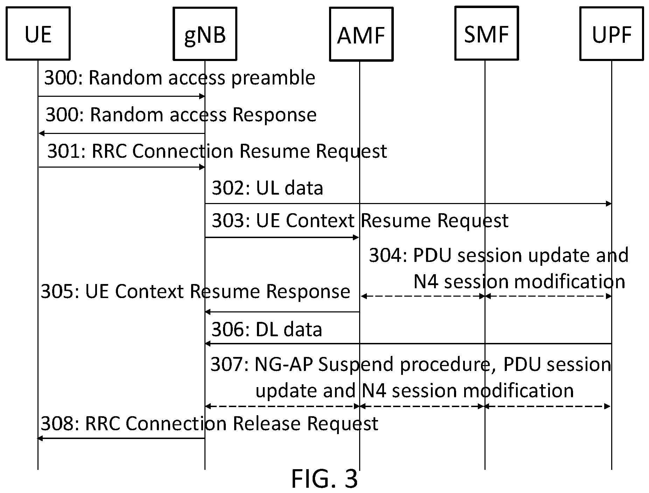

FIG. 3 shows a schematic diagram of an MO-EDT procedure without anchor relocation for the user plane CIoT optimization according to an embodiment of the present disclosure.

Specifically, upon connection resumption request for mobile originated data from upper layers, the UE initiates the MO-EDT procedure and selects a random access preamble configured for the EDT (step 300).

In step 301, the UE sends an RRC Connection Resume Request message to the gNB, wherein the RRC Connection Resume Request comprises an I-RNTI of the UE, a resume cause and an authentication token. The UE resumes all source radio bearers (SRBs) and data radio bearers (DRBs), derives new security keys using an NCC provided in an RRC Connection Release message of the previous connection and re-establishes the access stratum (AS) security. The UL data are ciphered (e.g. encrypted) and transmitted on the DTCH multiplexed with the RRC Connection Resume Request message on the CCCH.

In step 302, the UL data is delivered to a user plane function (UPF).

In step 303, the gNB sends a next generation application protocol (NG-AP) Context Resume Request message to an access and mobility management function (AMF) to resume a connection. If the UE includes an AS Release Assistance information indicating No further UL/DL higher layer packet data unit (PDU) in step 301, the gNB may request for an immediate transition to an idle state (RRC IDLE) with suspend.

In step 304 (optional), if the AMF does not receive a request for the immediate transition to the idle state with the suspend in step 303 or the AMF is aware of that DL data or signaling is pending, the AMF requests a session management function (SMF) to resume the PDU session.

In step 305, the AMF sends an NG-AP Context Resume Response message to the gNB. If the AMF receives a request for the immediate transition to the idle state with the suspend in step 303 and there is no pending DL data or signaling, the AMF includes a suspend indication in the NG-AP Context Resume Response message and keeps the UE in the idle state (e.g. connection management (CM) IDLE) with the suspend.

If the AMF includes the suspend indication in the NG-AP Context Resume Response message in step 305, the gNB proceeds to step 308. If the NG-AP Context Resume Response message does not include the suspend indication and the UE includes AS Release Assistance information indicating only a single DL data transmission subsequent to the UL transmission in step 301, the gNB may wait for the DL data to arrive (step 306) and proceeds to step 307.

In step 307, the gNB initiates an NG-AP UE Context Suspend procedure to inform the AMF that the RRC connection is being suspended. The AMF requests the SMF to suspend the PDU session and the SMF requests the UPF to release the tunnel information for the UE.

In step 308, the gNB sends an RRC Connection Release message to keep the UE in the idle state (e.g. RRC IDLE). This message includes a release cause set to RRC-Suspend, the I-RNTI, the NCC and drb-ContinueROHC which are stored by the UE. If the DL data were received in step 306, the information comprised in the RRC Connection Release message is ciphered and sent on the DTCH multiplexed with the RRC Connection Release message on the DCCH.

In an embodiment, if the AMF or gNB decides that the UE is moved to a connected state (RRC_CONNECTED), an RRC Connection Resume message is sent in step 307, to fall back to the RRC Connection resume procedure. In that case, the RRC Connection Resume message is integrity protected and ciphered with the keys derived in step 301 and the UE ignores the NCC included in the RRC Connection Resume message. The DL data may be transmitted on the DTCH multiplexed with the RRC Connection Resume message. In addition, an RRC Connection Setup may also be sent in step 307, to fall back to the RRC Connection establishment procedure.

In an embodiment, if neither the RRC Connection Release message nor, in case of fallback, RRC Connection Resume message is received in response to the RRC Connection Resume Request for the MO-EDT, the UE considers the UL data transmission not successful.

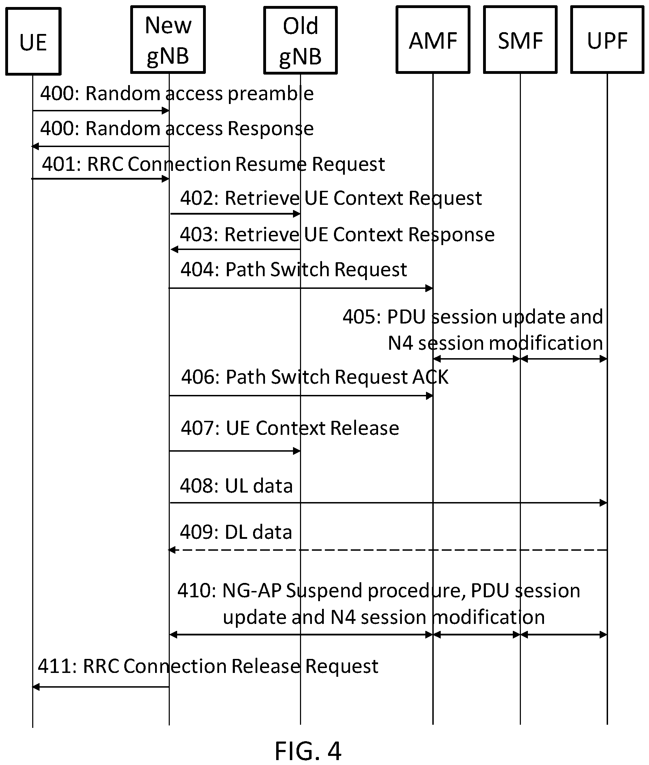

For the MO-EDT for user plane CIoT optimization, an RRC connection can also be resumed in another gNB (e.g. new gNB) different from the one where the connection was suspended (the gNB shown in FIG. 3, or old gNB). Inter gNB connection resumption is handled using context fetching, whereby the new gNB retrieves the UE context from the old gNB over Xn interface between gNBs. The new gNB provides the I-RNTI which is used by the old gNB, to identify the UE context. This is illustrated in the following FIG. 4 for the case of user plane CIoT optimization.

FIG. 4 shows a schematic diagram of an MO-EDT procedure with anchor relocation for the user plane CIoT optimization according to an embodiment of the present disclosure.

In detail, upon connection resumption request for mobile originated data from upper layers, the UE initiates the MO-EDT procedure and selects a random access preamble configured for the EDT (step 400).

In step 401, the UE sends an RRC Connection Resume Request message to the gNB, wherein the RRC Connection Resume Request comprises an I-RNTI of the UE, a resume cause and an authentication token. The UE resumes all SRBs and DRBs, derives new security keys using an NCC provided in an RRC Connection Release message of the previous connection and re-establishes the AS security. The UL data are ciphered (e.g. encrypted) and transmitted on the DTCH multiplexed with the RRC Connection Resume Request message on the CCCH.

In step 402, the new gNB locates the old gNB using the I-RNTI (for 5GS) and retrieves the UE context by means of the Xn-AP (e.g. for 5G system (5GS)) Retrieve UE Context procedure. In this embodiment, the new gNB transmits a Retrieve UE Context Request message to the old gNB.

In step 403, the old gNB responds with the UE context associated with the I-RNTI (e.g. for the 5GS) in a Retrieve UE Context Response message.

In step 404, the new gNB initiates a(n) (NG AP) path switch procedure to establish an NG UE associated signaling connection to a serving AMF and to request the AMF to resume the UE context.

In step 405, the AMF requests the SMF to resume the PDU session and the SMF requests the UPF to create the tunnel information for the UE and update the DL path.

In step 406, the AMF transmits a(n) (NG AP) path switch request acknowledgement (ACK) to the new gNB.

In step 407, after the (NG-AP) path switch procedure completes, the new gNB triggers a release of the UE context at the old gNB by means of a(n) (Xn-AP) UE Context Release procedure. In this embodiment, the new gNB transmits a UE Context Release message to the old gNB.

In step 408, the UL data is delivered to the UPF from the new gNB.

Steps 409 to 411 may be referred to steps 306 to 308.

In the following, UL/DL data transmissions (e.g., for SDT or EDT) with/without anchor relocation are illustrated with focuses on security Key.

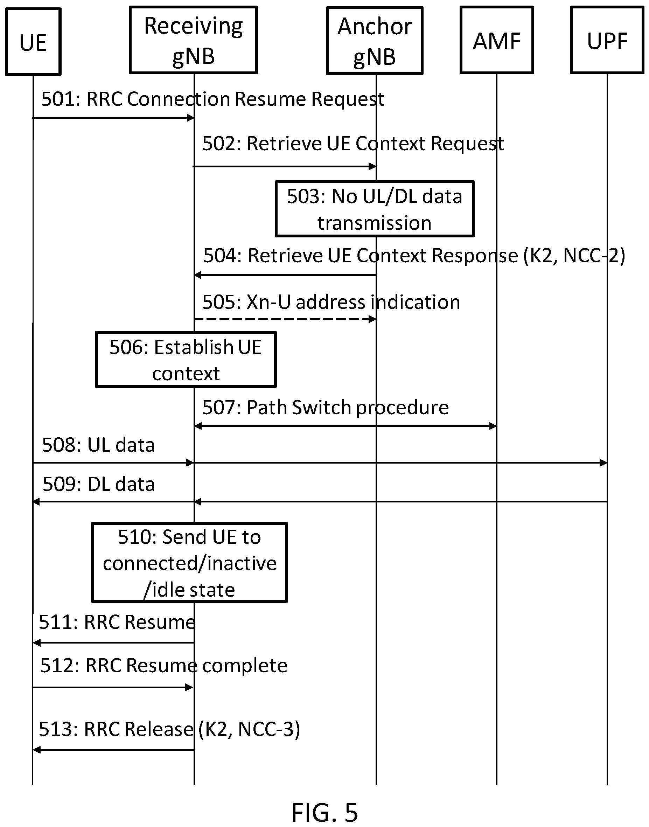

FIG. 5 shows a schematic diagram of a procedure associated with security key transfer with and without anchor relocation according to an embodiment of the present disclosure. In FIG. 5, the UE is in an inactive state (e.g. RRC INACTIVE mode) and stores a key K1 and an NCC-1 which are acquired from a previous connection (e.g. with the last serving gNB or anchor gNB) via receiving an RRC Connection Release message.

In step 501, the UE sends an RRC Connection Resume Request message to a receiving gNB (e.g. new gNB), wherein this message is ciphered by K1. Optionally, the UE also transmits UL data ciphered by a key K2, wherein K2 is derived based on K1 and NCC-1.

In step 502, the receiving gNB sends a Retrieve UE Context Request message to the anchor gNB (e.g. the last serving gNB or old gNB). In addition, if receiving the UL data ciphered by the K2 from the UE, the receiving gNB stores (e.g. buffers) the received UL data.

In step 503, no UL/DL data is transmitted through the anchor gNB. That is, K2 is not used by the anchor gNB.

In step 504, the anchor gNB sends a Retrieve UE Context Response message to the receiving gNB, wherein the Retrieve UE Context Response message includes K2 and an NCC-2. In an embodiment, the K2 is set as in an information element (IE) "Key NG-RAN Star" defined in TS 33.501.

According to 3GPP TS 38.423, IEs "Key NG-RAN Star" and "Next Hop Chaining Count" are included in "UE Context Information - Retrieve UE Context Response" IE contained in the Retrieve UE Context Response message.

In addition, an IE "AS Security Information" is used to generate the key material to be used for AS security with the UE and comprises the IEs "Key NG-RAN Star" and "Next Hop Chaining Count".

In step 505 (optional), if loss of DL user data buffered in the anchor gNB shall be prevented, the receiving gNB provides forwarding addresses to the anchor gNB.

In step 506, the receiving gNB established the UE context (e.g. stores the K2 and the NCC-2).

In step 507, the receiving gNB perform the path switch procedure with the AMF.

In steps 508 and 509, the UE sends UL data ciphered (e.g. encrypted) by the K2 and receives DL data by deciphering (e.g. decrypting) the received DL data by the K2. That is, the receiving gNB ciphers and deciphers the UL and DL data, respectively, by the K2.

In step 510, the receiving gNB may determine send the UE to one of connected state (steps 511 and 512 are subsequently performed), inactive state or an idle state (step 513 is subsequently performed).

In step 511, the receiving gNB sends an RRC Resume message to UE, this message is ciphered by the K2. In step 512, the UE transmits an RRC Resume complete message to the receiving gNB. After steps 511 and 512, the UE is transferred to the connected state.

In step 513, the receiving gNB sends an RRC Connection Release message to the UE, this message is ciphered by the K2 and includes an NCC-3.

In an embodiment, the NCC-1, NCC-2 and NCC-3 may be the same or different values.

In an embodiment, the receiving gNB becomes the anchor gNB for this UE after the anchor relocation. Thus, both the UE and the receiving gNB store the same key and the same NCC (i.e., K2 and NCC-3) for further usage (e.g. the UE may send another RRC Resume request message to the receiving gNB).

In FIG. 5, the security key (i.e. K2 stored within both UE and anchor gNB) is not used by the anchor gNB. Thus, the K2 can be transferred to the receiving gNB at the step 504 and the receiving gNB can use the K2 to cipher the UL/DL data at the steps 508 and 509.

However, if the K2 is used by the anchor gNB at step 503, the anchor gNB cannot at step 504 send the K2 included in IE "Key NG-RAN Star" because different RAN nodes (e.g., anchor gNB and receiving gNB) cannot use the same security Key. In the present disclosure, a method is proposed to transfer a new key (e.g. K3) from the anchor node to the receiving node and the UE for the future usage.

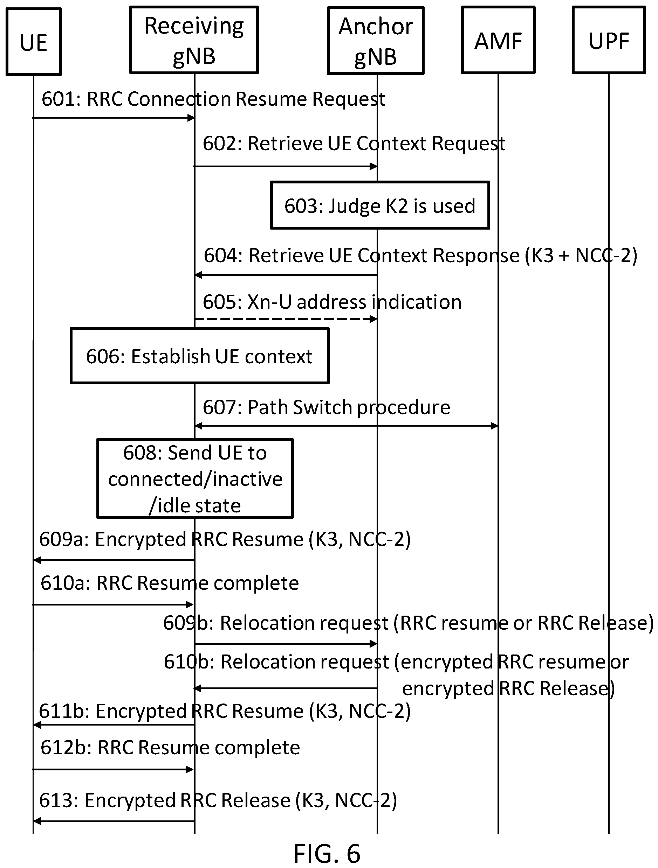

FIG. 6 shows a schematic diagram of procedure associated with a security key transfer according to an embodiment of the present disclosure. In FIG. 6, the UE is in the inactive state (e.g. RRC INACTIVE mode) and stores a key K1 and an NCC-1 which are acquired from a previous connection (e.g. with the last serving gNB or anchor gNB) via receiving an RRC Connection Release message.

In step 601, the UE sends an RRC Connection Resume Request message to a receiving gNB (e.g. new gNB), wherein this message is ciphered by the K1. Optionally, the UE also transmits UL data ciphered by a key K2, wherein K2 is derived based on K1 and NCC-1.

In step 602, the receiving gNB sends a Retrieve UE Context Request message to the anchor gNB (e.g. the last serving gNB or old gNB). In addition, if receiving the UL data ciphered by the K2 from the UE, the receiving gNB stores (e.g. buffers) the received UL data.

In step 603, the anchor gNB determines that the K2 is used.

In step 604, the anchor gNB transmits Retrieve UE Context response message comprising a new key K3 and an NCC-2, wherein the NCC-2 may be different from or the same with the NCC-1. In addition, the K2 may be further included in this Retrieve UE Context response message. In an embodiment, the K3 may be determine based on the K2. For example, the K3 may be derived based on K2 and one of the NCC-1, NCC-2.

In step 605 (optional), if loss of DL user data buffered in the anchor gNB shall be prevented, the receiving gNB provides forwarding addresses to the anchor gNB.

In step 606, the receiving gNB established the UE context (e.g. stores the K3 and the NCC-2).

In step 607, the receiving gNB perform the path switch procedure with the AMF.

In step 608, the receiving gNB may determine send the UE to one of connected state (steps 609a, 609b or steps 609b to 612b are subsequently performed), inactive state or an idle state (step 613 or steps 609b, 610b, 613 are subsequently performed).

Specifically, if receiving the K2 at step 604, the receiving gNB itself can use the K2 to encrypt the RRC Resume message or the RRC Release message, which comprises the K3 and NCC-2. Under such conditions, when determining sending the UE to the connected state, the receiving gNB transmits the RRC Resume message encrypted by the K2 to the UE and receives the RRC Resume complete message from the UE (steps 609a and 610a). Or, when determining sending the UE to the inactive state or the idle state, the receiving gNB transmits the RRC Release message encrypted by the K2 to the UE (step 613).

In an embodiment of the K2 not included in the Retrieve UE Context Response message at step 604, the receiving gNB itself cannot encrypt the RRC Resume message or the RRC Release message by the K2. Thus, when determining sending the UE to the connected state, the receiving gNB transmits a relocation request to the anchor gNB, wherein the relocation request comprises the RRC Resume message including the K3 and NCC-2 (step 609b). The anchor gNB encrypts the RRC Resume message by the K2 and transmits the encrypted RRC Resume message to the receiving gNB (step 610b). Next, the receiving gNB transmits the encrypted RRC Resume message comprising the K3 and NCC-2 to the UE and receives the RRC Resume complete message from the UE. When determining sending the UE to the inactive state or the idle state, the receiving gNB transmits the relocation request to the anchor gNB, wherein this relocation request comprises the RRC Release message including the K3 and NCC-2 (step 609b). The anchor gNB encrypts the RRC Release message by the K2 and transmits the encrypted RRC Resume message to the receiving gNB (step 610b). The receiving gNB therefore can transmit the encrypted RRC Release message comprising the K3 and NCC-2 to the UE (step 613).

In the following, actions of the UE, the receiving gNB and the anchor gNB in FIG. 6 are separately illustrated.

According to an embodiment, actions of the anchor gNB in the procedure shown FIG. 6 comprises:
1) receiving a Retrieve UE context request message for the UE from the receiving gNB;
2) judging (e.g. determining) whether its stored security key for the UE is used or not. (i.e., K2 stored in the previous connection with the UE and is sent to the UE via an RRC signaling, e.g., RRC Resume message and RRC Release message);
3) if K2 is used, setting a new key (i.e. K3) set within the IE "Key NG-RAN Star" as well as an NCC, and sending a Retrieve UE context Response message including the K3 and the NCC-2. Optional, the K2 can be also included in this message;
4) Optional, if receiving a message M1 including RRC Resume or RRC Release message from the receiving gNB, sending a message M2 including the RRC Resume or RRC Release message to the receiving gNB, wherein the RRC Resume or RRC Release message in the message M2 is ciphered by the K2.

In an embodiment, the messages M1 and M2 are XnAP signaling between the receiving gNB and the anchor gNB. For instance, the message M1 is named Relocation request message and the message M2 is named Relocation response message.

According to an embodiment, actions of the receiving gNB in the procedure shown in FIG. 6 comprises:
1) receiving an RRC Resume Request message from the UE;
2) sending a Retrieve UE context request message to the anchor gNB;
3) receiving a Retrieve UE context response message from the anchor gNB and storing the K3 and the NCC included in this message, and optionally storing the K2 if the K2 is included in this message.
4) deciding to send UE to one of RRC connected mode, RRC inactive mode or idle mode; If the K2 is including in the Retrieve UE context response message, action 5) is performed; otherwise, actions 6) to 8) are performed:
5) if K2 is included in the Retrieve UE context response message, sending an RRC Resume message including the K3(optional including NCC-2) to the UE, or sending an RRC Release message including the K3 and NCC-2 to the UE, wherein both RRC Resume message and RRC Release message are ciphered by the K2;
6) if the K2 is not included in the Retrieve UE context response message, sending the message M1 including the RRC resume/RRC Release message, wherein both the RRC resume and RRC Release message include the K3 and the NCC-2;
7) receiving the message M2 including RRC resume/RRC Release message ciphered by the key K2, wherein these two messages include the K3 and the NCC-2;
8) sending the ciphered RRC resume/RRC Release message including the K3 and NCC-2, wherein these two RRC messages are ciphered by the K2 at the anchor gNB.

According to an embodiment, actions of the UE in the procedure shown in FIG. 6 comprises:
1) storing K1 and NCC which are acquired by receiving an RRC message (e.g. RRC resume or RRC Release message) during previous connection (with the anchor node);
2) sending the RRC Resume Request message to the receiving gNB, this message is ciphered by the K1;
3) optional, transmitting UL data and receive DL data ciphered by K2 which is derived by the K1 and NCC;
4) receiving the RRC Resume message ciphered by the K2 or the RRC Release message ciphered by the K2, wherein the RRC Resume message including the K3 (and optionally the NCC-2) and the RRC Release message include the K3 and the NCC-2;
5) storing the K3 and the NCC and entering into the RRC inactive mode or idle mode;
6) when sending another RRC Resume Request message to the receiving gNB, ciphering (encrypting) this message by using the K3.

### In conclusion:

Both the UE and the receiving gNB store the K3 and NCC.

The receiving gNB sends the RRC resume/RRC Release message including the K3 and NCC to the UE through two methods:
Method 1: the RRC message is ciphered by the receiving gNB if the receiving gNB acquires the K2 for ciphering the RRC message.
Method 2: the RRC message is ciphered by the anchor gNB if the receiving gNB transmits the RRC message to the anchor gNB for ciphering the RRC message.

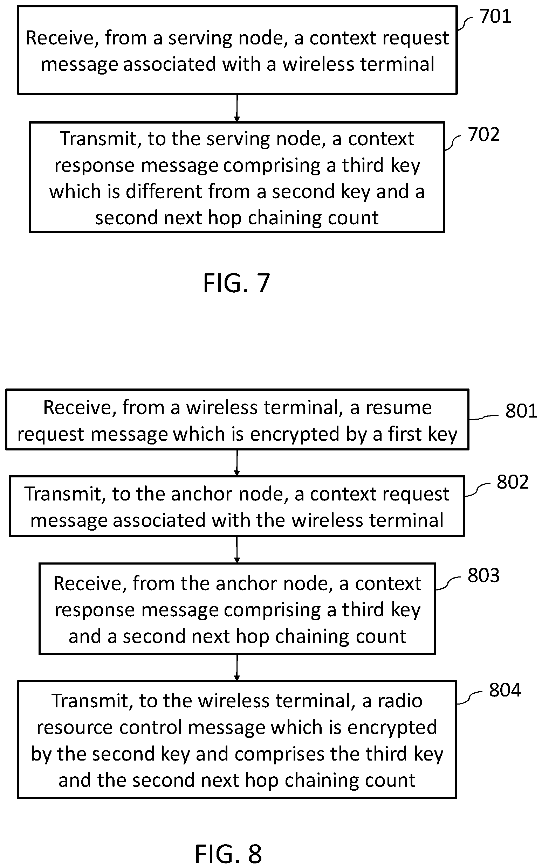

FIG. 7 shows a flowchart of a process according to an embodiment of the present disclosure. The process shown in FIG. 7 may be used in an anchor node (e.g. anchor gNB) and comprises the following steps:
Step 701: Receive, from a serving node, a context request message associated with a wireless terminal;
Step 702: Transmit, to the serving node, a context response message comprising a third key which is different from a second key and a second next hop chaining count.

In FIG. 7, the anchor node receives context request message associated with a wireless terminal, e.g., for requesting context information of the wireless terminal. In this embodiment, a first key and a first NCC are transmitted to the wireless terminal in a previous connection between the anchor node and the wireless terminal and a second key determined based on the first key and the first next hop chaining count is used by the anchor node. Under such conditions, the anchor node transmits a context response message comprising a third key which is different from the second key and a second NCC to the serving node. Note that, the second NCC may be different from or the same with the first NCC.

In an embodiment, the third key is an intermediate key used between the of the wireless terminal and the serving node. For example, the third key may be used for UL/DL data transmissions between the serving node or the wireless terminal.

In an embodiment, the third key is determined based on the second key.

In an embodiment, the first key and the first next hop chaining count are transmitted to the wireless terminal via an RRC connection release message.

In an embodiment, the context response message further comprises the second key.

In an embodiment, the anchor node receives a first message comprising an RRC message associated with the mobile terminal from the serving node and transmits a second message comprising the radio resource control message encrypted by the second key the serving node. In this embodiment, this RRC message may be an RRC Resume message or an RRC Release message. In addition, the first message and the second message are XnAP signaling.

FIG. 8 shows a flowchart of a process according to an embodiment of the present disclosure. The process shown in FIG. 8 may be used in a serving node (e.g. serving gNB) and comprises the following steps:
Step 801: Receive, from a wireless terminal, a resume request message which is encrypted by a first key;
Step 802: Transmit, to the anchor node, a context request message associated with the wireless terminal;
Step 803: Receive, from the anchor node, a context response message comprising a third key and a second next hop chaining count;
Step 804: Transmit, to the wireless terminal, a radio resource control message which is encrypted by a second key and comprises the third key and a second next hop chaining count.

In FIG. 8, the serving node receives a resume request message from a wireless terminal (e.g. in the inactive state), wherein the resume request message is encrypted by a first key. The first key and a first NCC are transmitted to the wireless terminal in a previous connection between an anchor node and the wireless terminal. For example, the first key and the first NCC are included in an RRC release message. In response to the resume request message, the serving node transmits context request message associated with the wireless terminal to an anchor node, e.g., for requesting context information of the wireless terminal (e.g. UE context). In this embodiment, the serving node receives a context response message comprising a third key and a second NCC, wherein the third key is different from a second key determined based on the first key and the first NCC. The serving node transmits an RRC message which is encrypted by the second key and comprises the third key and the second next hop chaining count to the wireless terminal.

In an embodiment, the second NCC is the same with or different from the first NCC.

In an embodiment, the third key is an intermediate key used between the of the wireless terminal and the serving node.

In an embodiment, the third key is determined based on the second key.

In an embodiment, the serving node receives, from the wireless terminal, at least one signaling message of the wireless terminal and/or uplink data no earlier than (when or after) receiving the resume request message and/or transmitting the radio resource control message. Note that, the at least one signaling message of the wireless terminal and the uplink data are encrypted by the second key.

In an embodiment, the first key and the first NCC are transmitted via an RRC connection Release message in the previous connection.

In an embodiment, the radio resource control message is one of a radio resource control resume message or a radio resource control release message.

In an embodiment, the context response message further comprises the second key.

In an embodiment, the serving node transmits a first message comprising the radio resource control message to the anchor node and receives a second message comprising the radio resource control message encrypted by the second key from the anchor node.

In an embodiment, the first message and the second message are XnAP signaling.

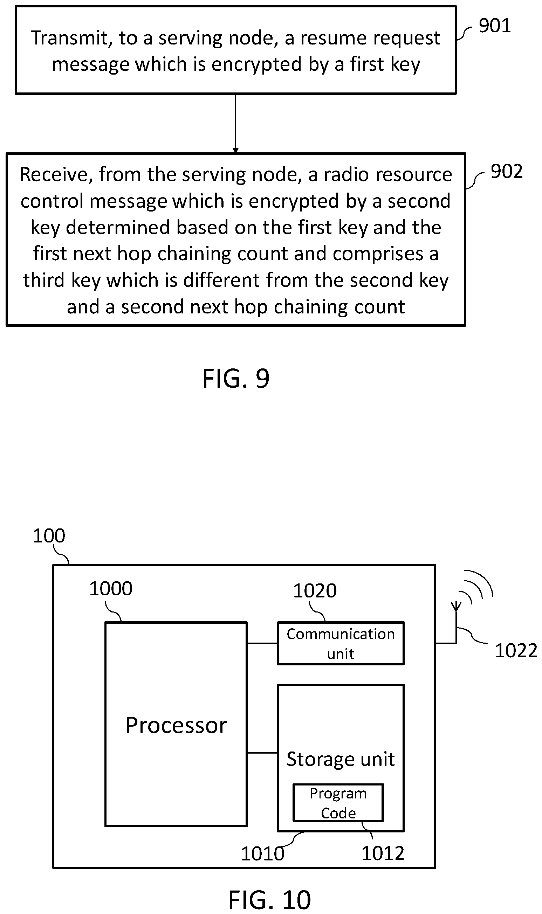

FIG. 9 shows a flowchart of a process according to an embodiment of the present disclosure. The process shown in FIG. 9 may be used in a wireless terminal (e.g. UE) and comprises the following steps:
Step 901: Transmit, to a serving node, a resume request message which is encrypted by a first key;
Step 902: Receive, from the serving node, a radio resource control message which is encrypted by a second key determined based on the first key and the first next hop chaining count and comprises a third key which is different from the second key and a second next hop chaining count.

In FIG. 9, the wireless terminal transmits a resume request message which is encrypted by a first key to the serving node, wherein the first key and a first NCC are received in a previous connection between the wireless terminal and an anchor node different from the serving node. Next, the wireless terminal receives an RRC message from the serving node, wherein the RRC message is encrypted by a second key determined based on the first key and the first NCC. In this embodiment, the RRC message comprises a third key which is different from the second key and a second NCC which may be different from or the same with the first NCC.

In an embodiment, the third key is an intermediate key used between the of the wireless terminal and the serving node. For example, the wireless terminal may communicate with the serving node (e.g. UL/DL data transmissions) by using the third key after receiving the RRC message.

In an embodiment, the third key is determined based on the second key.

In an embodiment, the wireless terminal transmits, to the serving node, at least one signaling message of the wireless terminal and/or uplink data no earlier than (when or after) receiving the resume request message and/or transmitting the radio resource control message. Note that, the at least one signaling message of the wireless terminal and the uplink data are encrypted by the second key.

In an embodiment, the first key and the first NCC are transmitted via an RRC connection Release message.

In an embodiment, the radio resource control message is one of an RRC resume message or an RRC release message.

In an embodiment, the context response message further comprises the second key.

FIG. 10 relates to a schematic diagram of a wireless terminal 100 according to an embodiment of the present disclosure. The wireless terminal 100 may be a user equipment (UE), a mobile phone, a laptop, a tablet computer, an electronic book or a portable computer system and is not limited herein. The wireless terminal 100 may include a processor 1000 such as a microprocessor or Application Specific Integrated Circuit (ASIC), a storage unit 1010 and a communication unit 1020. The storage unit 1010 may be any data storage device that stores a program code 1012, which is accessed and executed by the processor 1000. Embodiments of the storage unit 1012 include but are not limited to a subscriber identity module (SIM), read-only memory (ROM), flash memory, random-access memory (RAM), hard-disk, and optical data storage device. The communication unit 1020 may a transceiver and is used to transmit and receive signals (e.g. messages or packets) according to processing results of the processor 1000. In an embodiment, the communication unit 1020 transmits and receives the signals via at least one antenna 1022 shown in FIG. 10.

In an embodiment, the storage unit 1010 and the program code 1012 may be omitted and the processor 1000 may include a storage unit with stored program code.

The processor 1000 may implement any one of the steps in exemplified embodiments on the wireless terminal 100, e.g., by executing the program code 1012.

The communication unit 1020 may be a transceiver. The communication unit 1020 may as an alternative or in addition be combining a transmitting unit and a receiving unit configured to transmit and to receive, respectively, signals to and from a wireless network node (e.g. a base station).

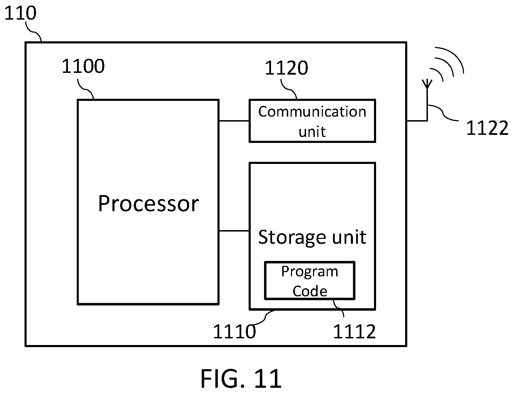

FIG. 11 relates to a schematic diagram of a wireless network node 110 according to an embodiment of the present disclosure. The wireless network node 110 may be a satellite, a base station (BS), a network entity, a Mobility Management Entity (MME), Serving Gateway (S-GW), Packet Data Network (PDN) Gateway (P-GW), a radio access network (RAN), a next generation RAN (NG-RAN), a gNB, an eNB, an NG-eNB, a data network, a core network or a Radio Network Controller (RNC), and is not limited herein. In addition, the wireless network node 110 may comprise (perform) at least one network function such as an access and mobility management function (AMF), a session management function (SMF), a user place function (UPF), a policy control function (PCF), an application function (AF), etc. The wireless network node 110 may include a processor 1100 such as a microprocessor or ASIC, a storage unit 1110 and a communication unit 1120. The storage unit 1110 may be any data storage device that stores a program code 1112, which is accessed and executed by the processor 1100. Examples of the storage unit 1112 include but are not limited to a SIM, ROM, flash memory, RAM, hard-disk, and optical data storage device. The communication unit 1120 may be a transceiver and is used to transmit and receive signals (e.g. messages or packets) according to processing results of the processor 1100. In an example, the communication unit 1120 transmits and receives the signals via at least one antenna 1122 shown in FIG. 11.

In an embodiment, the storage unit 1110 and the program code 1112 may be omitted. The processor 1100 may include a storage unit with stored program code.

The processor 1100 may implement any steps described in exemplified embodiments on the wireless network node 110, e.g., via executing the program code 1112.

The communication unit 1120 may be a transceiver. The communication unit 1120 may as an alternative or in addition be combining a transmitting unit and a receiving unit configured to transmit and to receive, respectively, signals to and from a wireless terminal (e.g. a user equipment).

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A wireless communication method for use in an anchor node, the method comprising:
receiving, from a serving node, a context request message associated with a wireless terminal, wherein a first key and a first next hop chaining count are transmitted to the wireless terminal in a previous connection between the anchor node and the wireless terminal and wherein a second key determined based on the first key and the first next hop chaining count is used by the anchor node, and
transmitting, to the serving node, a context response message comprising a third key which is different from the second key and a second next hop chaining count.

2. The wireless communication method of claim 1, wherein
the third key is an intermediate key used between the of the wireless terminal and the serving node, and/or
the third key is determined based on the second key, and/or
the first key and the first next hop chaining count are transmitted via a radio resource control connection release message.

3. The wireless communication method of claim 1 or 2, wherein the context response message further comprises the second key.

4. The wireless communication method of any of claims 1 to 3, further comprising:
receiving, from the serving node, a first message comprising a radio resource control message associated with the mobile terminal, and
transmitting, to the serving node, a second message comprising the radio resource control message encrypted by the second key, wherein:
the radio resource control message is one of a radio resource control resume message or a radio resource control release message, and/or
the first message and the second message are Xn application protocol, XnAP, signaling.

5. A wireless communication method for use in a serving node, the method comprising:
receiving, from a wireless terminal, a resume request message which is encrypted by a first key, wherein the first key and a first next hop chaining count are transmitted to the wireless terminal in a previous connection between an anchor node and the wireless terminal,
transmitting, to the anchor node, a context request message associated with the wireless terminal,
receiving, from the anchor node, a context response message comprising a third key and a second next hop chaining count, wherein the third key is different from a second key determined based on the first key and the first next hop chaining count, and
transmitting, to the wireless terminal, a radio resource control message which is encrypted by the second key and comprises the third key and the second next hop chaining count.

6. The wireless communication method of claim 5, wherein the third key is an intermediate key used between the of the wireless terminal and the serving node, and/or
wherein the third key is determined based on the second key.

7. The wireless communication of any of claim 5 or 6, further comprising:
receiving, from the wireless terminal, at least one signaling message of the wireless terminal and/or uplink data no earlier than receiving the resume request message and/or transmitting the radio resource control message,
wherein the at least one signaling message of the wireless terminal and the uplink data are encrypted by the second key.

8. The wireless communication method of any of claims 5 to 7, wherein:
the first key and the first next hop chaining count are transmitted via a radio resource control connection Release message, and/or
the radio resource control message is one of a radio resource control resume message or a radio resource control release message, and/or
wherein the context response message further comprises the second key.

9. The wireless communication method of any of claims 5 to 8, further comprising:
transmitting, to the anchor node, a first message comprising the radio resource control message, and
receiving, from the anchor node, a second message comprising the radio resource control message encrypted by the second key, wherein the first message and the second message are Xn application protocol, XnAP, signaling, and further comprising: communicating with the wireless terminal by using the third key after transmitting the radio resource control message.

10. A wireless communication method for use in a wireless terminal, the method comprising:
transmitting, to a serving node, a resume request message which is encrypted by a first key, wherein the first key and a first next hop chaining count are received in a previous connection between the wireless terminal and an anchor node different from the serving node, and
receiving, from the serving node, a radio resource control message which is encrypted by a second key determined based on the first key and the first next hop chaining count and comprises a third key which is different from the second key and a second next hop chaining count.

11. The wireless communication method of claim 10, wherein:
the third key is an intermediate key used between the wireless terminal and the serving node, and/or
the third key is determined based on the second key, and/or
the first key and the first next hop chaining count are received in a radio resource control connection Release message, and/or
the radio resource control message is one of a radio resource control Resume message or a radio resource control Release message.

12. The wireless communication of claim 10 or 11, further comprising:
transmitting, to the serving node, at least one signaling message of the wireless terminal and/or uplink data no earlier than transmitting the resume request message and/or before receiving the radio resource control message, wherein the at least one signaling message of the wireless terminal and the uplink data are encrypted by the second key, and/or
communicating with the serving node by using the third key after receiving the radio resource control message.

13. An anchor node, comprising:
a communication unit, configured to:
receive, from a serving node, a context request message associated with a wireless terminal, wherein a first key and a first next hop chaining count are transmitted to the wireless terminal in a previous connection between the anchor node and the wireless terminal and wherein a second key determined based on the first key and the first next hop chaining count is used by the anchor node, and
transmit, to the serving node, a context response message comprising a third key which is different from the second key and a second next hop chaining count.

14. A serving node, comprising:
a communication unit, configured to:
receive, from a wireless terminal, a resume request message which is encrypted by a first key, wherein the first key and a first next hop chaining count are transmitted to the wireless terminal in a previous connection between an anchor node and the wireless terminal,
transmit, to the anchor node, a context request message associated with the wireless terminal,
receive, from the anchor node, a context response message comprising a third key and a second next hop chaining count, wherein the third key is different from a second key determined based on the first key and the first next hop chaining count, and
transmit, to the wireless terminal, a radio resource control message which is encrypted by the second key and comprises the third key and the second next hop chaining count.

15. A wireless terminal, comprising:
a communication unit, configured to:
transmit, to a serving node, a resume request message which is encrypted by a first key, wherein the first key and a first next hop chaining count are received in a previous connection between the wireless terminal and an anchor node different from the serving node, and
receive, from the serving node, a radio resource control message which is encrypted by a second key determined based on the first key and the first next hop chaining count and comprises a third key which is different from the second key and a second next hop chaining count.

## Patentansprüche

1. Drahtlos-Kommunikationsverfahren zur Verwendung in einem Ankerknoten, wobei das Verfahren aufweist:
Empfangen, von einem Dienstknoten, einer Kontextanforderungsnachricht, die mit einem Drahtlos-Endgerät verknüpft ist, wobei ein erster Schlüssel und ein erster nächster Hop-Verkettungszähler an das Drahtlos-Endgerät in einer vorhergehenden Verbindung zwischen dem Ankerknoten und dem Drahtlos-Endgerät übertragen werden und wobei ein zweiter Schlüssel basierend auf dem ersten Schlüssel und dem ersten nächsten Hop-Verkettungszähler bestimmt wird, vom Ankerknoten verwendet wird, und
Übertragen, an den Dienstknoten, einer Kontextantwortnachricht, die einen dritten Schlüssel aufweist, der sich vom zweiten Schlüssel und dem zweiten nächsten Hop-Verkettungszähler unterscheidet.

2. Drahtlos-Kommunikationsverfahren nach Anspruch 1, wobei
der dritte Schlüssel ein Zwischenschlüssel ist, der zwischen dem Drahtlos-Endgerät und dem Dienstknoten verwendet wird, und/oder
der dritte Schlüssel basierend auf dem zweiten Schlüssel bestimmt wird, und/oder
der erste Schlüssel und der erste nächste Hop-Verkettungszähler über eine Funkressourcensteuerungs-Verbindungsfreigabenachricht übertragen werden.

3. Drahtlos-Kommunikationsverfahren nach Anspruch 1 oder 2, wobei die Kontextantwortnachricht weiterhin den zweiten Schlüssel aufweist.

4. Drahtlos-Kommunikationsverfahren nach einem der Ansprüche 1 bis 3, das weiterhin aufweist:
Empfangen, von dem Dienstknoten, einer ersten Nachricht, die eine Funkressourcen-Steuerungsnachricht aufweist, die mit dem mobilen Endgerät verknüpft ist, und
Übertragen, an den Dienstknoten, einer zweiten Nachricht, die die Funkressourcen-Steuerungsnachricht aufweist, die mit dem zweiten Schlüssel verschlüsselt wird, wobei:
die Funkressourcen-Steuerungsnachricht eine von einer Funkressourcensteuerungs-Wiederaufnahmenachricht oder einer Funkressourcensteuerungs-Freigabenachricht ist, und/oder
die erste Nachricht und die zweite Nachricht, Xn-Anwendungsprotokoll-, XnAP-, Signalisierungen sind.

5. Drahtlos-Kommunikationsverfahren zur Verwendung in einem Dienstknoten, wobei das Verfahren aufweist:
Empfangen, von einem Drahtlos-Endgerät, einer Wiederaufnahme-Anforderungsnachricht, die mit einem ersten Schlüssel verschlüsselt wird, wobei der erste Schlüssel und ein erster nächster Hop-Verkettungszähler an das Drahtlos-Endgerät in einer vorhergehenden Verbindung zwischen einem Ankerknoten und dem drahtlosen Endgerät übertragen werden,
Übertragen, an den Ankerknoten, einer Kontextanforderungsnachricht, die mit dem Drahtlos-Endgerät verknüpft ist,
Empfangen, vom Ankerknoten, einer Kontextanforderungsnachricht, die einen dritten Schlüssel und einen zweiten nächsten Hop-Verkettungszähler aufweist, wobei sich der dritte Schlüssel von einem zweiten Schlüssel, der basierend auf dem ersten Schlüssel und dem ersten nächsten Hop-Verkettungszähler bestimmt wird, unterscheidet, und
Übertragen, an das Drahtlos-Endgerät, einer durch den zweiten Schlüssel verschlüsselten Funkressourcen-Steuerungsnachricht, die den dritten Schlüssel und den zweiten nächsten Hop-Verkettungszähler aufweist.

6. Drahtlos-Kommunikationsverfahren nach Anspruch 5, wobei der dritte Schlüssel ein Zwischenschlüssel ist, der zwischen dem Drahtlos-Endgerät und dem Dienstknoten verwendet wird, und/oder
wobei der dritte Schlüssel basierend auf dem zweiten Schlüssel bestimmt wird.

7. Drahtlos-Kommunikationsverfahren nach einem der Ansprüche 5 bis 6, das weiterhin aufweist:
Empfangen, vom Drahtlos-Endgerät, von wenigstens einer Signalisierungsnachricht des Drahtlos-Endgeräts und/oder von Uplink-Daten erst bei Empfangen der Wiederaufnahmeanforderungsnachricht und/oder dem Übertragen der Funkressourcen-Steuerungsnachricht,
wobei die wenigstens eine Signalisierungsnachricht des Drahtlos-Endgeräts und die Uplink-Daten durch den zweiten Schlüssel verschlüsselt werden.

8. Drahtlos-Kommunikationsverfahren nach einem der Ansprüche 5 bis 7, wobei
der erste Schlüssel und der erste nächste Hop-Verkettungszähler über eine Funkressourcensteuerungs-Verbindungsfreigabenachricht übertragen werden und/oder
die Funkressourcen-Steuerungsnachricht eine von einer Funkressourcensteuerungs-Wiederaufnahmenachricht oder einer Funkressourcensteuerungs-Freigabenachricht ist, und/oder
wobei die Kontextantwortnachricht weiterhin den zweiten Schlüssel aufweist.

9. Drahtlos-Kommunikationsverfahren nach einem der Ansprüche 5 bis 8, das weiterhin aufweist:
Übertragen, an den Ankerknoten, einer ersten Nachricht, die eine Funkressourcen-Steuerungsnachricht aufweist, und
Empfangen, vom Ankerknoten, einer zweiten Nachricht, die die mit dem zweiten Schlüssel verschlüsselte Funkressourcen-Steuerungsnachricht aufweist, wobei die erste Nachricht und die zweite Nachricht Xn-Anwendungsprotokoll-, XnAP-, Signalisierungen sind und weiterhin aufweisen:
Kommunizieren mit dem Drahtlos-Endgerät unter Verwendung des dritten Schlüssels nach Übertragen der Funkressourcen-Steuerungsnachricht.

10. Drahtlos-Kommunikationsverfahren zur Verwendung in einem Drahtlos-Endgerät, wobei das Verfahren aufweist:
Übertragen, an einen Dienstknoten, einer Wiederaufnahme-Anforderungsnachricht, die mit einem ersten Schlüssel verschlüsselt ist, wobei der erste Schlüssel und ein erster nächster Hop-Verkettungszähler in einer vorhergehenden Verbindung zwischen dem Drahtlos-Endgerät und einem Ankerknoten, der sich vom Dienstknoten unterscheidet, empfangen werden, und
Empfangen, von dem Dienstknoten, einer Funkressourcen-Steuerungsnachricht, die mit einem zweiten Schlüssel verschlüsselt wird, der basierend auf dem ersten Schlüssel und dem ersten nächsten Hop-Verkettungszähler verschlüsselt wird, und einen dritten Schlüssel aufweist, der sich vom zweiten Schlüssel und dem zweiten nächsten Hop-Verkettungszähler unterscheidet.

11. Drahtlos-Kommunikationsverfahren nach Anspruch 10, wobei:
der dritte Schlüssel ein Zwischenschlüssel ist, der zwischen dem Drahtlos-Endgerät und dem Dienstknoten verwendet wird, und/oder
der dritte Schlüssel basierend auf dem zweiten Schlüssel bestimmt wird, und/oder
der erste Schlüssel und der erste nächste Hop-Verkettungszähler in einer Funkressourcensteuerungs-Verbindungsfreigabenachricht empfangen werden, und/oder
die Funkressourcen-Steuerungsnachricht eine von einer Funkressourcensteuerungs-Wiederaufnahmenachricht oder einer Funkressourcensteuerungs-Freigabenachricht ist.

12. Drahtlos-Kommunikationsverfahren nach einem der Ansprüche 10 oder 11, das weiterhin beinhaltet:
Übertragen, an den Dienstknoten, von wenigstens einer Signalisierungsnachricht des Drahtlos-Endgeräts und/oder von Uplink-Daten erst bei Empfangen der Wiederaufnahmeanforderungsnachricht und/oder vor dem Empfang der Funkressourcen-Steuerungsnachricht, wobei die wenigstens eine Signalisierungsnachricht des Drahtlos-Endgeräts und die Uplink-Daten mit dem zweiten Schlüssel verschlüsselt werden, und/oder
Kommunizieren mit dem Dienstknoten unter Verwendung des dritten Schlüssels nach Empfangen der Funkressourcen-Steuerungsnachricht.

13. Ankerknoten, der aufweist:
eine Kommunikationseinheit, die dazu konfiguriert ist:
von einem Dienstknoten eine Kontextanforderungsnachricht zu empfangen, die mit einem Drahtlos-Endgerät verknüpft ist, wobei ein erster Schlüssel und ein erster nächster Hop-Verkettungszähler an das Drahtlos-Endgerät in einer vorherigen Verbindung zwischen dem Ankerknoten und dem Drahtlos-Endgerät übertragen werden, und wobei ein zweiter Schlüssel, der basierend auf dem ersten Schlüssel und dem ersten nächsten Hop-Verkettungszähler bestimmt wird, vom Ankerknoten verwendet wird, und
an den Dienstknoten eine Kontextantwortnachricht zu übertragen, die einen dritten Schlüssel aufweist, der sich vom zweiten Schlüssel und einem zweiten nächsten Hop-Verkettungszähler unterscheidet.

14. Ankerknoten, der aufweist:
eine Kommunikationseinheit, die dazu konfiguriert ist:
von einem Drahtlos-Endgerät eine mit einem ersten Schlüssel verschlüsselte Wiederaufnahmeanforderungsnachricht zu empfangen, wobei der erste Schlüssel und ein erster nächster Hop-Verkettungszähler an das Drahtlos-Endgerät in einer vorhergehenden Verbindung zwischen einem Ankerknoten und dem Drahtlos-Endgerät übertragen werden,
an den Ankerknoten eine mit dem Drahtlos-Endgerät verknüpfte Kontextanforderungsnachricht zu übertragen,
vom Ankerknoten eine Kontextantwortnachricht, die einen dritten Schlüssel und einen zweiten nächsten Hop-Verkettungszähler aufweist, zu empfangen, wobei sich der dritte Schlüssel von einem zweiten Schlüssel, der basierend auf dem ersten Schlüssel und dem ersten nächsten Hop-Verkettungszähler bestimmt wird, unterscheidet, und
an das Drahtlos-Endgerät eine Funkressourcen-Steuerungsnachricht zu übertragen, die mit dem zweiten Schlüssel verschlüsselt wird und den dritten Schlüssel und den zweiten nächsten Hop-Verkettungszähler aufweist.

15. Drahtlos-Endgerät, das aufweist:
eine Kommunikationseinheit, die dazu konfiguriert ist:
an einen Dienstknoten eine Wiederaufnahmeanforderungsnachricht zu übertragen, die mit einem ersten Schlüssel verschlüsselt ist, wobei der erste Schlüssel und ein erster nächster Hop-Verkettungszähler in einer vorhergehenden Verbindung zwischen dem Drahtlos-Endgerät und einem Ankerknoten empfangen werden, der sich vom Dienstknoten unterscheidet, und
vom Dienstknoten eine Funkressourcen-Steuerungsnachricht, die mit einem zweiten Schlüssel verschlüsselt wird, der basierend auf dem ersten Schlüssel und dem ersten nächsten Hop-Verkettungszähler bestimmt wird, zu empfangen, und einen dritten Schlüssel aufweist, der sich vom zweiten Schlüssel und einem zweiten nächsten Hop-Verkettungszähler unterscheidet.

## Revendications

1. Procédé de communication sans fil pour une utilisation dans un nœud d'ancrage, le procédé comprenant les étapes consistant à :
recevoir, depuis un nœud de service, un message de requête de contexte associé à un terminal sans fil, dans lequel une première clé et un premier compte de chaînage de prochains sauts sont transmis au terminal sans fil dans une connexion précédente entre le nœud d'ancrage et le terminal sans fil et dans lequel une deuxième clé déterminée sur la base de la première clé et du premier compte de chaînage de prochains sauts est utilisée par le nœud d'ancrage, et
émettre, vers le nœud de service, un message de réponse de contexte comprenant une troisième clé qui est différente de la deuxième clé et d'un second compte de chaînage de prochains sauts.

2. Procédé de communication sans fil selon la revendication 1, dans lequel
la troisième clé est une clé intermédiaire utilisée entre le terminal sans fil et le nœud de service, et/ou
la troisième clé est déterminée sur la base de la deuxième clé, et/ou
la première clé et le premier compte de chaînage de prochains sauts sont transmis via un message de libération de connexion de commande de ressource radio.

3. Procédé de communication sans fil selon la revendication 1 ou 2, dans lequel le message de réponse de contexte comprend en outre la deuxième clé.

4. Procédé de communication sans fil selon l'une quelconque des revendications 1 à 3, comprenant en outre les étapes consistant à :
recevoir, depuis le nœud de service, un premier message comprenant un message de commande de ressource radio associé au terminal mobile, et
émettre, vers le nœud de service, un second message comprenant le message de commande de ressource radio chiffré par la seconde clé, dans lequel :
le message de commande de ressource radio est l'un d'un message de reprise de commande de ressource radio ou d'un message de libération de commande ressource radio, et/ou
le premier message et le second message sont une signalisation de protocole d'application Xn, XnAP.

5. Procédé de communication sans fil pour une utilisation dans un nœud de service, le procédé comprenant procédé comprenant les étapes consistant à :
recevoir, depuis un terminal sans fil, un message de requête de reprise qui est chiffré par une première clé, dans lequel la première clé et un premier compte de chaînage de prochains sauts sont transmis au terminal sans fil dans une connexion précédente entre un nœud d'ancrage et le terminal sans fil,
émettre, vers le nœud d'ancrage, un message de requête de contexte associé au terminal sans fil,
recevoir, depuis le nœud d'ancrage, un message de réponse de contexte comprenant une troisième clé et un second compte de chaînage de prochains sauts, dans lequel la troisième clé est différente d'une deuxième clé déterminée sur la base de la première clé et du premier compte de chaînage de prochains sauts, et
émettre, vers le terminal sans fil, un message de commande de ressource radio qui est chiffré par la deuxième clé et qui comprend la troisième clé et le second compte de chaînage de prochains sauts.

6. Procédé de communication sans fil selon la revendication 5, dans lequel la troisième clé est une clé intermédiaire utilisée entre le terminal sans fil et le nœud de service, et/ou dans lequel la troisième clé est déterminée sur la base de la deuxième clé.

7. Communication sans fil selon l'une quelconque des revendications 5 ou 6, comprenant en outre les étapes consistant à :
recevoir, depuis le terminal sans fil, au moins un message de signalisation du terminal sans fil et/ou des données de liaison montante pas avant de recevoir le message de requête de reprise et/ou d'émettre le message de commande de ressource radio,
dans lequel ledit au moins un message de signalisation du terminal sans fil et les données de liaison montante sont chiffrées par la deuxième clé.

8. Procédé de communication sans fil selon l'une quelconque des revendications 5 à 7, dans lequel :
la première clé et le premier compte de chaînage de prochains sauts sont transmis via un message de libération de connexion de commande de ressource radio, et/ou
le message de commande de ressource radio est l'un d'un message de reprise de commande de ressource radio ou d'un message de libération de commande de ressource radio, et/ou
dans lequel le message de réponse de contexte comprend en outre la deuxième clé.

9. Procédé de communication sans fil selon l'une quelconque des revendications 5 à 8, comprenant en outre les étapes consistant à :
émettre, vers le nœud d'ancrage, un premier message comprenant le message de commande de ressource radio, et
recevoir, depuis le nœud d'ancrage, un second message comprenant le message de commande de ressource radio chiffré par la deuxième clé, dans lequel le premier message et le second message sont une signalisation de protocole d'application Xn, XnAP, et comprenant en outre : de communiquer avec le terminal sans fil en utilisant la troisième clé après émission du message de commande de ressource radio.

10. Procédé de communication sans fil pour une utilisation dans un terminal sans fil, le procédé comprenant les étapes consistant à :
émettre, vers un nœud de service, un message de requête de reprise qui est chiffré par une première clé, dans lequel la première clé et un premier compte de chaînage de prochains sauts sont reçus dans une connexion précédente entre le terminal sans fil et un nœud d'ancrage différent d'un nœud de service, et
recevoir, depuis le nœud de service, un message de commande de ressource radio qui est chiffré par une deuxième clé déterminée sur la base de la première clé et du premier compte de chaînage de prochains sauts et qui comprend une troisième clé qui est différente de la deuxième clé et d'un second compte de chaînage de prochains sauts.

11. Procédé de communication sans fil selon la revendication 10, dans lequel :
la troisième clé est une clé intermédiaire utilisée entre le terminal sans fil et le nœud de service, et/ou
la troisième clé est déterminée sur la base de la deuxième clé, et/ou
la première clé et le premier compte de chaînage de prochains sauts sont reçus dans un message de libération de connexion de commande ressource radio, et/ou
le message de commande de ressource radio est l'un d'un message de reprise de commande ressource radio ou d'un message de libération de commande de ressource radio.

12. Procédé de communication sans fil selon l'une quelconque des revendications 10 ou 11, comprenant en outre les étapes consistant à :
émettre, vers le nœud de service, au moins un message de signalisation du terminal sans fil et/ou des données de liaison montante pas avant d'émettre le message de requête de reprise et/ou avant de recevoir le message de commande de ressource radio, dans lequel ledit au moins un message de signalisation du terminal sans fil et les données de liaison montant sont chiffrés par la deuxième clé, et/ou
communiquer avec le nœud de service en utilisant la troisième clé après réception du message de commande de ressource radio.

13. Nœud d'ancrage, comprenant :
une unité de communication, configurée pour :
recevoir, depuis un nœud de service, un message de requête de contexte associé à un terminal sans fil, dans lequel une première clé et un premier compte de chaînage de prochains sauts sont transmis au terminal sans fil dans une connexion précédente entre le nœud d'ancrage et le terminal sans fil et dans lequel une deuxième clé déterminée sur la base de la première clé et du premier compte de chaînage de prochains sauts est utilisée par le nœud d'ancrage, et
émettre, vers un nœud de service, un message de réponse de contexte comprenant une troisième clé qui est différente de la deuxième clé et d'un deuxième compte de chaînage de prochains sauts.

14. Nœud de service, comprenant :
une unité de communication, configurée pour :
recevoir, depuis un terminal sans fil, un message de requête de reprise qui est chiffré par une première clé, dans lequel la première clé et un premier compte de chaînage de prochains sauts sont transmis au terminal sans fil dans une connexion précédente entre un nœud d'ancrage et le terminal sans fil,
émettre, vers le nœud d'ancrage, un message de requête de contexte associé au terminal sans fil,
recevoir, depuis le nœud d'ancrage, un message de réponse de contexte comprenant une troisième clé et un second compte de chaînage de prochains sauts, dans lequel la troisième clé est différente d'une deuxième clé déterminée sur la base de la première clé et du premier compte de chaînage de prochains sauts, et
émettre, vers le terminal sans fil, un message de commande de ressource radio qui est chiffré par la deuxième clé et qui comprend la troisième clé et le second compte de chaînage de prochains sauts.

15. Terminal sans fil, comprenant :
une unité de communication, configurée pour :
émettre, vers un nœud de service, un message de requête de reprise qui est chiffré par une première clé, dans lequel la première clé et un premier compte de chaînage de prochains sauts sont reçus dans une connexion précédente entre le terminal sans fil et un nœud d'ancrage différent du nœud de service, et
recevoir, depuis le nœud de service, un message de commande de ressource radio qui est chiffré par une deuxième clé déterminée sur la base de la première clé et du premier compte de chaînage de prochains sauts et qui comprend une troisième clé qui est différente de la deuxième clé et d'un second compte de chaînage de prochains sauts.
